# FASCICULE DE BREVET EUROPEEN

(11) **EP 1 400 679 B1**
(45) Date de publication et mention de la délivrance du brevet: **28.12.2005**
(21) Numéro de dépôt: 03292031.6
(22) Date de dépôt: 14.08.2003
(51) Int. Cl.: F02D 41/40, F02D 35/02, F02D 41/24

(54) **Système de contrôle du fonctionnement d'un moteur diesel de véhicule automobile**
Steuereinrichtung um einen Kraftfahrzeug-Dieselmotor zu betrieben
Control system for operating a Diesel engine of an automotive vehicle

(30) Priorité: 23.09.2002 FR 0211738
(43) Date de publication de la demande: 24.03.2004
(73) Titulaire: Peugeot Citroen Automobiles SA, 78943 Vélizy-Villacoublay Cedex (FR); Delphi Technologies, Inc., Troy, MI 48098 (US)
(72) Inventeur: Vermonet, Claire, 75116 Paris (FR); Meissonnier, Guillaume, 41190 Landes le Gaulois (FR); Lorret, Cédric, 75011 Paris (FR)
(74) Mandataire: Habasque, Etienne J. Jean-François

(56) Documents cités:
- EP-A- 0 921 294
- EP-A- 0 921 296
- EP-A- 0 959 237
- DE-A- 10 032 931
- PATENT ABSTRACTS OF JAPAN vol. 012, no. 145 (M-693), 6 mai 1988 (1988-05-06) & JP 62 267546 A (NIPPON DENSO CO LTD), 20 novembre 1987 (1987-11-20)
- PATENT ABSTRACTS OF JAPAN vol. 012, no. 206 (M-708), 14 juin 1988 (1988-06-14) & JP 63 009657 A (ISUZU MOTORS LTD), 16 janvier 1988 (1988-01-16)

## Description

La présente invention concerne un système de contrôle du fonctionnement d'un moteur Diesel de véhicule automobile.

Plus particulièrement, l'invention concerne le contrôle du fonctionnement d'un tel moteur équipé de moyens à rampe commune d'alimentation en carburant des cylindres de ce moteur.

On connaît déjà dans l'état de la technique, des systèmes de contrôle de ce type qui ont été développés pour assurer une uniformité et une stabilité dans le temps de la combustion dans les cylindres du moteur.

Ainsi par exemple, on connaît du document US-A-4 621 603, un système de contrôle dans lequel l'injection de carburant peut être équilibrée entre les chambres de combustion du moteur par un réglage du rapport air/carburant en appliquant un facteur de correction sur l'injection de carburant pour chaque chambre de combustion du moteur.

Mais, les systèmes connus présentent un certain nombre d'inconvénients, notamment pour les moteurs Diesel à injection directe à partir d'une rampe commune d'alimentation.

En effet, ces systèmes sont sujets en sortie d'usine à une dispersion et à une dérive dans le temps, au cours de l'utilisation du véhicule, de la caractéristique en débit des injecteurs utilisés, principalement dues aux tolérances de fabrication et aux pressions extrêmement élevées mises en jeu.

Ces dérives se traduisent alors par une dégradation du bruit de combustion du moteur qui occasionne une gêne pour les utilisateurs du véhicule.

De plus, le moteur lui-même évolue au cours de son utilisation, au niveau du taux de compression, de la perméabilité des soupapes, des segments, etc..., ce qui modifie les conditions thermodynamiques de la combustion.

On peut considérer le brevet EP-A-0 921 296 (TOYOTA) comme plus proche état de la technique, il décrit un système de contrôle du fonctionnement d'un moteur Diesel de véhicule automobile, comportant une rampe commune, des injecteurs de carburant dans chaque cylindre, injectant une injection pilote et une injection principale de carburant. Ce système comprend aussi un capteur de bruit de combustion dans les cylindres, des moyens de notation du bruit de fonctionnement du moteur à partir des informations en sortie de ce capteur et des moyens d'analyse de ce bruit pour réguler la quantité injectée dans l'injection pilote.

Le but de l'invention est donc de résoudre ces problèmes.

A cet effet, l'invention a pour objet un système de contrôle du fonctionnement d'un moteur Diesel de véhicule automobile, du type comportant des moyens à rampe commune d'alimentation en carburant des cylindres du moteur, adaptés pour déclencher une injection de carburant dans chaque cylindre du moteur, selon au moins une injection pilote et une injection principale de carburant, caractérisé en ce qu'il comporte des moyens d'acquisition du bruit de combustion dans les cylindres du moteur comprenant un capteur de pression associé à chaque cylindre du moteur et des moyens de notation du bruit de fonctionnement du moteur à partir des informations de pression en sortie de ces capteurs, des moyens d'analyse de ce bruit et des moyens de modification à intervalles réguliers, de la quantité de carburant injecté dans les cylindres lors de l'injection pilote, afin d'optimiser le bruit de fonctionnement du moteur.

Suivant d'autres caractéristiques :
- ce système comporte des moyens de modification de la quantité de carburant injecté comprennent des moyens d'enclenchement de moyens de test de quantité de carburant injecté modifiée, pour déterminer la quantité correspondant à un bruit de fonctionnement optimisé et des moyens de stockage de la quantité ainsi déterminée pour l'appliquer à la place de la quantité de carburant injecté avant la phase de test,
- les moyens de test sont adaptés pour mettre en oeuvre un algorithme de recalage consistant d'abord à tester une augmentation de débit pilote tant que le bruit de combustion est fortement amélioré, afin de diminuer le bruit de combustion, puis à tester une réduction du débit pilote tant que le bruit de combustion est faiblement dégradé, afin de déterminer un niveau seuil à partir duquel le bruit de combustion est optimisé,
- les moyens de modification sont adaptés pour mettre en oeuvre un algorithme de recalage consistant d'abord à relever pour chacun des cylindres, une courbe caractéristique de l'évolution du bruit en fonction du débit pilote, en appliquant différentes valeurs de débit pilote autour de la valeur nominale cartographiée entre une valeur minimale et une valeur maximale, puis à déterminer à partir de cette courbe, le débit pilote souhaité ;
- les moyens de modification sont également adaptés pour faire varier l'avance de l'injection pilote ;
- les moyens de modification de l'avance de l'injection pilote comprennent des moyens de relevé pour chacun des cylindres, d'une courbe caractéristique de l'évolution du bruit en fonction de l'avance en appliquant différentes valeurs d'avance autour de la valeur nominale cartographiée entre une valeur minimale et une valeur maximale, puis à déterminer à partir de cette courbe l'avance souhaitée ;
- le fonctionnement des moyens de modification est déclenché à intervalles réguliers sur un nombre prédéterminé de points de fonctionnement prédéfinis du moteur,
- le fonctionnement des moyens de modification est déclenché lorsque le véhicule a parcouru un kilométrage prédéterminé après une modification précédente,
- le fonctionnement des moyens de modification est déclenché lorsque le véhicule a fonctionné pendant une période de temps prédéterminée, après une modification précédente ; et
- les moyens de modification sont adaptés pour modifier séquentiellement la quantité de carburant injecté dans chaque cylindre du moteur indépendamment les uns des autres.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure et le fonctionnement d'un système de contrôle selon l'invention ;
- la Fig.2 représente un organigramme illustrant un algorithme de recalage mis en oeuvre dans un tel système ; et
- les Figs.3 et 4 représentent des courbes relevées, utilisées dans des variantes de réalisation du système selon l'invention.

On sait que dans un moteur Diesel de véhicule automobile, comportant des moyens à rampe commune d'alimentation en carburant des cylindres du moteur, les moyens de commande de ceux-ci sont adaptés pour déclencher une injection de carburant dans chaque cylindre du moteur, selon au moins une injection pilote et une injection principale de carburant.

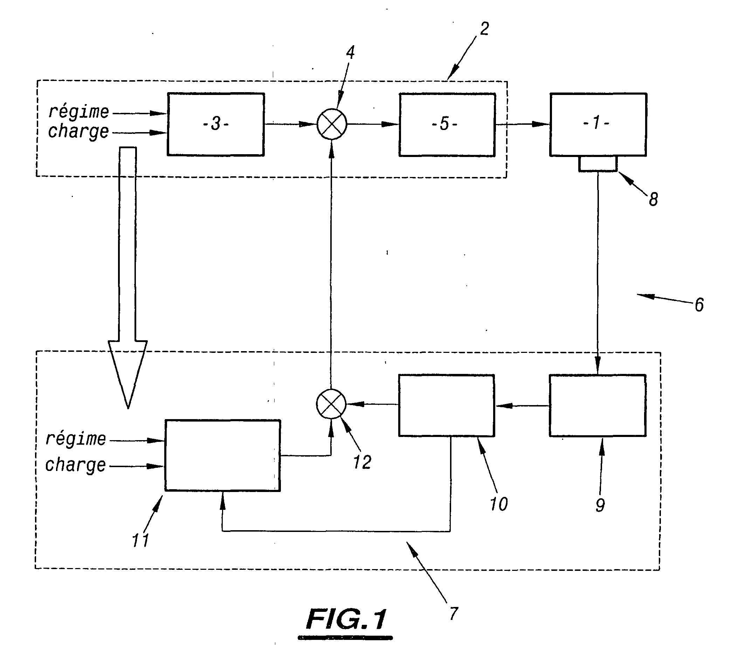

Ceci est illustré sur la figure 1, dans laquelle le moteur Diesel est désigné par la référence générale 1, tandis que les moyens de contrôle de l'injection de carburant dans celui-ci, sont désignés par la référence générale 2 et délivrent donc des impulsions de contrôle du fonctionnement des injecteurs associés aux cylindres du moteur, pour assurer une telle injection de carburant dans le moteur.

Ces moyens comprennent des moyens formant cartographie initiale désignés par la référence générale 3, recevant en entrée des informations, notamment de régime et de charge du moteur, pour délivrer une information de consigne d'injection, relative notamment au débit de l'injection pilote.

Cette information de consigne est alors transmise à un additionneur désigné par la référence générale 4, qui sera décrit plus en détail par la suite, dont la sortie est reliée à des moyens 5 formant cartographie d'injecteur, permettant de délivrer les informations correspondantes de contrôle de l'injection.

Selon l'invention, ce système comporte également des moyens d'acquisition du bruit de combustion dans les cylindres du moteur et des moyens d'analyse de ce bruit, désignés par la référence générale 6 sur cette figure, associés à des moyens 7 de modification à intervalles réguliers, de la quantité de carburant injectée dans chaque cylindre lors de l'injection pilote, afin d'optimiser le bruit de fonctionnement du moteur.

Les moyens d'acquisition du bruit de combustion dans les cylindres du moteur comprennent par exemple, un capteur de pression cylindre désigné par la référence générale 8 sur cette figure, associé à chaque cylindre du moteur, et adapté pour délivrer une information de pression à des moyens de notation du bruit de fonctionnement du moteur, à partir de ces informations de pression, ces moyens de notation étant désignés par la référence générale 9 sur cette figure.

Différents modes de réalisation de ces moyens de notation du bruit de fonctionnement sont déjà connus dans l'état de la technique, tels que par exemple un système connu sous le nom de « Système EICP », pour « Energy Index of Combustion Pressure. »

D'autres systèmes sont également connus.

Les moyens de modification comprennent quant à eux, d'une part, des moyens de recalage désignés par la référence générale 10 sur cette figure, et d'autre part, des moyens de cartographie de correction de débit désignés par la référence générale 11, dont les sorties sont associées à travers un additionneur désigné par la référence générale 12 sur cette figure 1.

Les moyens de cartographie de correction reçoivent en entrée des informations de régime et de charge et sont adaptés pour délivrer des informations de correction du débit de l'injection pilote.

Pour tenir compte des problèmes de dispersion et de dérive mentionnés précédemment, on active à intervalles réguliers, une stratégie de modification de la quantité de carburant injecté dans les cylindres lors de l'injection pilote, dans le but d'optimiser le bruit de fonctionnement de ce moteur.

La stratégie de recalage correspondante est par exemple activée lorsque le véhicule a parcouru un kilométrage prédéterminé ou a fonctionné pendant une période de temps prédéterminée, après une modification précédente et les moyens de modification sont adaptés pour modifier séquentiellement la quantité de carburant injecté dans chaque cylindre du moteur, indépendamment les uns des autres.

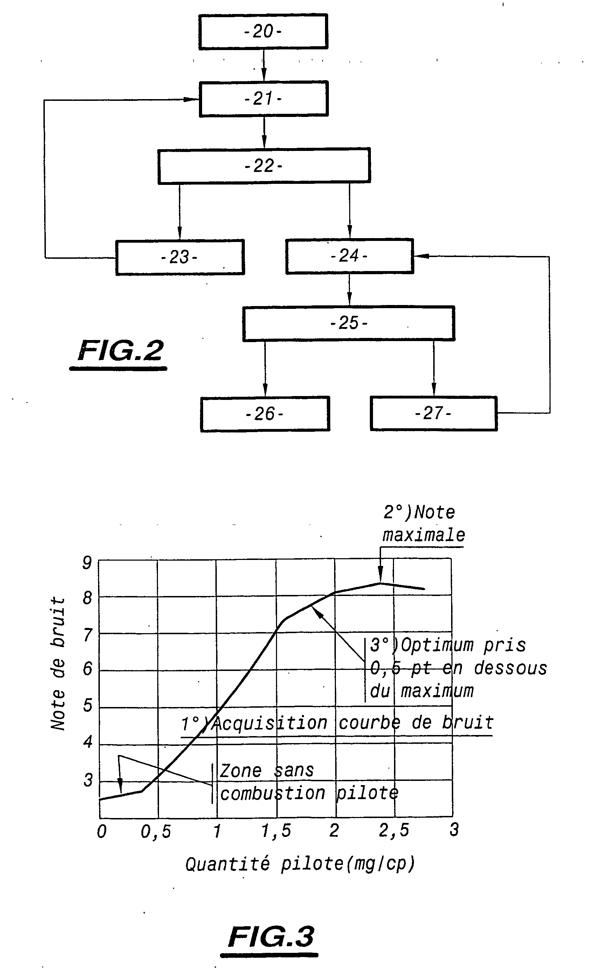

Ces moyens de modification ne sont déclenchés à intervalles réguliers, que sur un nombre déterminé de points de fonctionnement prédéfinis du moteur et mettent alors une stratégie de recalage, telle qu'elle est illustrée par l'organigramme de la figure 2.

En fait, les moyens de modification comprennent des moyens d'enclenchement de moyens de test de quantité de carburant injectée modifiée, pour déterminer la quantité correspondant à un bruit de fonctionnement optimisé et des moyens de stockage de la quantité ainsi déterminée pour l'appliquer à la place de la quantité de carburant injecté avant la phase de test.

L'algorithme de recalage consiste alors d'abord à tester une augmentation de débit pilote tant que le bruit de combustion est fortement amélioré, afin d'améliorer le bruit de combustion du moteur, puis à tester une réduction du débit pilote tant que le bruit de combustion est faiblement dégradé, afin de déterminer un niveau seuil à partir duquel le bruit de combustion n'est plus suffisamment amélioré.

Ainsi, sur la figure 2, en 20, on utilise pour le pilotage initial des moyens d'alimentation en carburant, le débit pilote initial.

Lorsque l'on déclenche une phase de recalage, en 21, on teste une augmentation de ce débit pilote, par exemple par incrémentation de celle-ci.

En 22, on détermine un gradient de bruit détecté.

Si ce gradient est supérieur à un seuil prédéterminé, correspondant à une forte amélioration du bruit, on décide alors de la poursuite de l'augmentation du débit pilote en rebouclant sur la phase 21.

Ceci permet alors de tester une augmentation du débit pilote tant que le bruit de combustion est fortement amélioré, afin d'améliorer le bruit de combustion du moteur.

Dans le cas où le gradient de bruit détecté en 22 ne subit plus une forte amélioration, on passe à une étape 24 de test d'une réduction de ce débit pilote.

En 25, on détermine également un gradient de bruit détecté.

Si l'on constate une forte dégradation du bruit, on détermine en 26, la fin du recalage.

Si le gradient de bruit détecté lors de l'étape 25 n'est pas soumis à une forte dégradation du bruit, on décide en 27, de poursuivre la réduction du débit pilote en rebouclant sur l'étape 24.

Ceci est mis en oeuvre par les moyens de recalage 10 et les moyens de cartographie de correction 11 décrits en regard de la figure 1, à travers les additionneurs 12 et 4.

La phase de test est en effet déclenchée au niveau des moyens de recalage 10 qui permettent de délivrer des valeurs de test à travers l'additionneur 12 vers l'additionneur 4 associé aux moyens de cartographie initiale 3.

Lorsque, à la fin du recalage, le système et plus particulièrement les moyens de recalage 10, ont déterminé de nouvelles valeurs, celles-ci sont adressées aux moyens de cartographie de correction 11, pour remplacer les valeurs initiales et les appliquer à la place de celles-ci.

On conçoit alors que dans ce système, l'avance et le débit de l'injection principale de carburant ne sont pas modifiés de façon à limiter l'influence de la stratégie de recalage sur le couple, la consommation et les rejets polluants du moteur.

Seul le débit de l'injection pilote est recalé, le gain possible sur le recalage de l'avance de l'injection pilote étant nettement plus faible, voire négligeable.

Une valeur de correction est donc ajoutée aux consignes de débit pilote issues des moyens de cartographie initiale 3.

Ainsi, la correction de cette injection pilote en fonction de la température et de la pression atmosphérique par exemple, reste calculée par ces moyens.

Comme cela a été indiqué précédemment, les recalages sont effectués par exemple à intervalles réguliers, par exemple tous les 1000 kilomètres, ou au bout d'une période de temps de fonctionnement prédéterminée sur un certain nombre de points de fonctionnement prédéfinis du moteur.

Les corrections obtenues sont ensuite appliquées en continu.

Les corrections sont individualisées pour chaque cylindre et des moyens de saturation de type classique, permettent éventuellement de limiter la plage de variation des paramètres.

En ce qui concerne le recalage, des essais de variations de débit pilote ont montré qu'au-delà d'un certain niveau de débit, le bruit de combustion est peu amélioré par une augmentation de débit.

L'optimisation du débit pilote consiste donc à rechercher le niveau à partir duquel le bruit n'est plus suffisamment amélioré pour une augmentation de ce débit pilote.

A titre d'exemple, on peut utiliser lors du recalage des incréments de débit pilote de 0,4 mg/cp.

Bien entendu, d'autres modes de réalisation encore de ce système peuvent être envisagés.

Ainsi par exemple, d'autres stratégies de recalage utilisant d'autres algorithmes peuvent être envisagées.

Ainsi par exemple, on peut décider d'appliquer différentes valeurs de débit pilote par pas de 0,4 mg par exemple autour de la valeur nominale telle qu'elle est cartographiée et cela entre une valeur minimale et une valeur maximale définies.

Cette stratégie mise en oeuvre par les moyens de modification permet alors de tracer pour chacun des cylindres du moteur, une sorte de courbe caractéristique de l'évolution du bruit en fonction de la quantité pilote comme cela est illustré sur la figure 3.

On peut ainsi ensuite déterminer à partir de cette courbe la quantité souhaitée correspondant à la meilleure note ou à la meilleure note moins 0,5 point, pour un compromis bruit/consommation.

La quantité pilote est alors obtenue par interpolation linéaire, les notes élevées, sur 10 par exemple, correspondant à des niveaux de bruit bas.

De même, il a été indiqué précédemment que le gain d'un même type de recalage vis à vis de l'avance est négligeable.

Bien qu'un tel gain soit effectivement mineur par rapport au gain sur l'optimisation de la quantité de carburant injecté, il y a tout de même un gain et de la même manière que pour la quantité, il est possible de procéder à un test en faisant varier l'avance de l'injection pilote par pas de 2° en étant à la quantité pilote optimale comme déterminée précédemment.

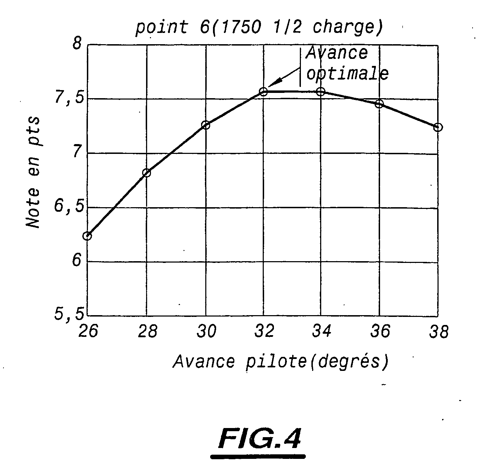

Ceci est illustré sur la figure 4 et permet ensuite aux moyens de modification d'appliquer une double correction sur l'avance et la quantité de carburant de l'injection pilote.

## Revendications

1. Système de contrôle du fonctionnement d'un moteur Diesel de véhicule automobile, du type comportant des moyens à rampe commune d'alimentation en carburant des cylindres du moteur, adaptés pour déclencher une injection de carburant dans chaque cylindre du moteur (1), selon au moins une injection pilote et une injection principale de carburant, **caractérisé en ce qu'**il comporte des moyens (6) d'acquisition du bruit de combustion dans les cylindres du moteur comprenant un capteur de pression (8) associé à chaque cylindre du moteur (1) et des moyens (9) de notation du bruit de fonctionnement du moteur à partir des informations de pression en sortie de ces capteurs, des moyens (6) d'analyse de ce bruit et des moyens (7) de modification à intervalles réguliers, de la quantité de carburant injecté dans les cylindres lors de l'injection pilote, afin d'optimiser le bruit de fonctionnement du moteur.

2. Système selon la revendication 1, **caractérisé en ce que** les moyens de modification de la quantité de carburant injecté comprennent des moyens d'enclenchement de moyens (10) de test de quantité de carburant injecté modifiée, pour déterminer la quantité correspondant à un bruit de fonctionnement optimisé et des moyens (11) de stockage de la quantité ainsi déterminée pour l'appliquer à la place de la quantité de carburant injecté avant la phase de test.

3. Système selon la revendication 2, **caractérisé en ce que** les moyens de test (10) sont adaptés pour mettre en oeuvre un algorithme de recalage consistant d'abord à tester une augmentation de débit pilote (21,22,23) tant que le bruit de combustion est fortement amélioré, afin d'améliorer le bruit de combustion, puis à tester une réduction (24,25,27) du débit pilote tant que le bruit de combustion est faiblement dégradé, afin de déterminer un niveau seuil à partir duquel le bruit de combustion n'est plus suffisamment amélioré.

4. Système selon la revendication 2, **caractérisé en ce que** les moyens de modification sont adaptés pour mettre en oeuvre un algorithme de recalage consistant d'abord à relever pour chacun des cylindres, une courbe caractéristique de l'évolution du bruit en fonction du débit pilote, en appliquant différentes valeurs de débit pilote autour de la valeur nominale cartographiée entre une valeur minimale et une valeur maximale, puis à déterminer à partir de cette courbe, le débit pilote souhaité.

5. Système selon l'une quelconque des revendications précédentes, **caractérisé en ce que** les moyens de modification sont également adaptés pour faire varier l'avance de l'injection pilote.

6. Système selon la revendication 5, **caractérisé en ce que** les moyens de modification de l'avance de l'injection pilote comprennent des moyens de relevé pour chacun des cylindres, d'une courbe caractéristique de l'évolution du bruit en fonction de l'avance en appliquant différentes valeurs d'avance autour de la valeur nominale cartographiée entre une valeur minimale et une valeur maximale, puis à déterminer à partir de cette courbe l'avance souhaitée.

7. Système selon l'une quelconque des revendications précédentes, **caractérisé en ce que** le fonctionnement des moyens (7) de modification est déclenché à intervalles réguliers sur un nombre prédéterminé de points de fonctionnement prédéfinis du moteur.

8. Système selon la revendication 7, **caractérisé en ce que** le fonctionnement des moyens (7) de modification est déclenché lorsque le véhicule a parcouru un kilométrage prédéterminé après une modification précédente.

9. Système selon la revendication 7, **caractérisé en ce que** le fonctionnement des moyens de modification est déclenché lorsque le véhicule a fonctionné pendant une période de temps prédéterminée, après une modification précédente.

10. Système selon l'une quelconque des revendications précédentes, **caractérisé en ce que** les moyens (7) de modification sont adaptés pour modifier séquentiellement la quantité de carburant injecté dans chaque cylindre du moteur indépendamment les uns des autres.

## Patentansprüche

1. System zum Steuern des Betriebs eines Kraftfahrzeug-Dieselmotors von dem Typ mit Common-Rail-Einrichtungen für die Versorgung der Zylinder des Motors mit Kraftstoff, welche dazu ausgelegt sind, eine Einspritzung von Kraftstoff in jeden Zylinder des Motors (1) zumindest gemäß einer Voreinspritzung und einer Haupteinspritzung von Kraftstoff auszulösen,
**dadurch gekennzeichnet,**
**daß** es folgendes aufweist:
Einrichtungen (6) zum Erfassen des Verbrenztungsgeräusches in den Zylindern des Motors, weiche einen jedem Zylinder des Motors (1) zugeordneten Drucksensor (8) und Einrichtungen (9) zur Darstellung des Betriebsgeräusches des Motors in Abhängigkeit von Druckinformationen am Ausgang dieser Sensoren aufweisen,
Einrichtungen (6) zum Analysieren dieses Geräusches, sowie
Einrichtungen (7) zum Modifizieren der bei der Voreinspritzung in die Zylinder einzuspritzenden Kraftstoffmenge in regelmäßigen Zeitabständen zum Optimieren des Betriebsgeräusches des Motors.

2. System nach Anspruch 1,
**dadurch gekennzeichnet,**
**daß** die Einrichtungen zum Modifizieren der einzuspritzenden Kraftstoffmenge Einrichtungen zum Einschalten von Einrichtungen (10) zum Testen der modifizierten einzuspritzenden Kraftstoffmenge aufweisen, um die einem optimierten Betriebsgeräusch entsprechende Menge zu bestimmen, sowie Einrichtungen (11) zum Streichern der auf diese Weise bestimmten Menge aufweisen, um diese anstelle der vor der Oberprüfungsphase eingespritzten Kraftstoffmenge anzuwenden.

3. System nach Anspruch 2,
**dadurch gekennzeichnet,**
**daß** die lesteinrichtungen (10) dazu ausgelegt sind, einen Abstufungsalgorithmus anzuwenden, der darin besteht, zuerst eine Erhöhung des Voreinspritzungsdurchsatzes (21, 22, 23) zu testen, solange das Verbrennungsgeräusch noch stark verbessert wird, um das Verbrennungsgeräusch zu verbessern, und daraufhin eine Verringerung (24, 25, 27) des Voreinspritzungsdurchsatzes zu testen, solange das Verbrennungsgeräusch nur geringfügig verschlechtert ist, um einen Schwellwert zu bestimmen, ab dem das Verbrennungsgeräusch nicht mehr ausreichend verbessert wird.

4. System nach Anspruch 2,
**dadurch gekennzeichnet,**
**daß** die Modinzierungseinrichtungen dazu ausgelegt sind, einen Abstufungsalgorithmus anzuwenden, der darin besteht, zuerst für jeden der Zylinder durch Anwenden verschiedener Voreinspritzungs-Durchsatzwerte um den aufgezeichneten Nominalwert zwischen einem minimalen Wert und einem maximalen Wert eine Kennlinie der Entwicklung des Geräusches in Abhängigkeit von dem Voreinspritzungsdurchsatz zu ermitteln, und daraufhin ausgehend von dieser Kennlinie den gewünschten Voreinspritzungsdurchsatz zu bestimmen.

5. System nach einem der vorhergehenden Ansprüche,
**dadurch gekennzeichnet,**
**daß** die Modifizierungseinrichtungen auch dazu ausgelegt sind, das Voreilen der Voreinspritzung zu variieren.

6. System nach Anspruch 5,
**dadurch gekennzeichnet,**
**daß** die Einrichtungen zum Modifizieren des Voreilens der Voreinspritzung Einrichtungen aufweisen, welche durch Anwenden verschiedener Voreilwerte um den aufgezeichneten Nominalwert zwischen einem minimalen Wert und einem maximalen Wert eine Kennlinie der Entwicklung des Geräusches in Abhängigkeit von der Voreilung für jeden der Zylinder ermitteln, und daraufhin ausgehend von dieser Kennlinie die gewünschte Voreilung bestimmen.

7. System nach einem der vorhergehenden Ansprüche,
**dadurch gekennzeichnet,**
**daß** der Betrieb der Modifizierungseinrichtungen (7) in regelmäßigen Zeitabständen bezogen auf eine vorgegebene Anzahl von vorausgehend definierten Betriebspunkten des Motors ausgelöst wird.

8. System nach Anspruch 7,
**dadurch gekennzeichnet,**
**daß** der Betrieb der Modifizierungseinrichtungen (7) ausgelöst wird, wenn das Fahrzeug nach einer vorausgegangenen Modifikation eine vorgegebene Anzahl von Kilometern durchfahren hat.

9. System nach Anspruch 7,
**dadurch gekennzeichnet,**
**daß** der Betrieb der Modifizierungseinrichtungen ausgelöst wird, wenn das Fahrzeug nach einer vorausgegangenen Modifikation während einer vorgegebenen Zeitdauer in Betrieb war.

10. System nach einem der vorhergehenden Ansprüche,
**dadurch gekennzeichnet,**
**daß** die Modifizierungseinrichtungen (7) dazu ausgelegt sind, nacheinander die in jeden Zylinder des Motors einzuspritzende Kraftstoffmenge unabhängig voneinander zu modifizieren.

## Claims

1. A system for controlling the operation of a motor vehicle diesel engine, of the type comprising engine cylinder fuel supply means with a common manifold, adapted to trigger injection of fuel into each cylinder of the engine (1), in accordance with a pilot injection and a principal injection of fuel, **characterised in that** it includes means (6) for acquiring the combustion noise in the cylinders of the engine comprising a pressure sensor (8) associated with each cylinder of the engine (1) and means (9) for notating the operating noise of the engine on the basis of pressure information at the output of the sensor, means (6) for analysing this noise and means (7) for modifying the quantity of fuel injected into the cylinders at regular intervals during pilot injection in order to optimise the operating noise of the engine.

2. A system according to claim 1, **characterised in that** the means for modifying the quantity of fuel injected comprise means for triggering means (10) for testing the modified quantity of fuel injected to determine the quantity corresponding to an optimised operating noise and means (11) for storing the quantity thus determined to substitute it for the quantity of fuel injected before the test phase.

3. A system according to claim 2, **characterised in that** the test means (10) are adapted to execute a recalibration algorithm consisting firstly in testing an increased pilot flowrate (21, 22, 23) when the combustion noise is greatly improved, in order to improve the combustion noise, and then testing a decreased pilot flowrate (24, 25, 27) when the combustion noise is slightly degraded, in order to determine a threshold level from which the combustion noise is no longer sufficiently improved.

4. A system according to claim 2, **characterised in that** the modification means are adapted to execute a recalibration algorithm consisting firstly in obtaining for each cylinder a curve characteristic of the evolution of the noise as a function of the pilot flowrate, applying different values of the pilot flowrate about a mapped nominal value between a minimum value and a maximum value, and then determining the required pilot flowrate from this curve.

5. A system according to any one of the preceding claims, **characterised in that** the modification means are also adapted to vary the advance of the pilot injection.

6. A system according to claim 5, **characterised in that** the means for modifying the advance of the pilot injection comprise means for producing for each cylinder a curve characteristic of the evolution of the noise as a function of the advance, applying different values of the advance around a mapped nominal value between a minimum value and a maximum value, and then determining the required advance from this curve.

7. A system according to any one of the preceding claims, **characterised in that** the modification means (7) are triggered at regular intervals over a predetermined number of predefined operating points of the engine.

8. A system according to claim 7, **characterised in that** the modification means (7) are triggered when the vehicle has travelled a predetermined distance after a preceding modification.

9. A system according to claim 7, **characterised in that** the modification means are triggered when the vehicle has operated for a predetermined time period after a preceding modification.

10. A system according to any one of the preceding claims, **characterised in that** the modification means (7) are adapted to modify sequentially and independently the quantity of fuel injected into each engine cylinder.
